# EUROPÄISCHE PATENTSCHRIFT

(11) **EP 4 054 477 B1**
(45) Veröffentlichungstag und Bekanntmachung des Hinweises auf die Patenterteilung: **30.04.2025**
(21) Anmeldenummer: 20816383.2
(22) Anmeldetag: 02.11.2020
(51) Int. Cl.: A61C 8/00

(54) **SYSTEMMONTAGESCHNITTSTELLE**
SYSTEM ASSEMBLY INTERFACE
INTERFACE DE SYSTÈME D'ASSEMBLAGE

(30) Priorität: 04.11.2019 DE 102019007624
(43) Veröffentlichungstag der Anmeldung: 14.09.2022
(73) Patentinhaber: Spindler, Bruno, 77728 Oppenau (DE)
(72) Erfinder: REUTER, Timo, 76646 Bruchsal (DE); SPINDLER, Bruno, 77728 Oppenau (DE)
(74) Vertreter: Thämer, Wolfgang
(86) Internationale Anmeldenummer: PCT/DE2020/000264
(87) Internationale Veröffentlichungsnummer: WO 2021/089067

(56) Entgegenhaltungen:
- WO-A1-2018/029650
- WO-A1-2019/155343
- DE-A1- 10 101 907
- DE-U1- 20 303 653
- US-A- 5 104 318
- US-A1- 2016 151 130
- US-A1- 2017 231 726

## Beschreibung

Die Erfindung betrifft eine Systemmontageschnittstelle mit einem eine Suprakonstruktion tragenden mehrteiligen Suprastrukturträger und einem ein Spanninnengewinde aufweisenden Implantatkörper, wobei ein Teil des Suprastrukturträgers über einen Implantatschraubbolzen am Implantatkörper angeordnet ist.

In der zahnärztlichen Implantologie wird u.a. im Rahmen der Herstellung eines prothetischen Einzelzahnersatzes häufig ein enossaler Implantatkörper verwendet, der die Prothese trägt. In diesem Fall wird der Implantatkörper, eine Art Schraubdübel, in eine künstlich im Patientenkiefer erzeugte Bohrung eingeschraubt. Der eingeschraubte Implantatkörper nimmt bei der fertigen Prothese einen Implantatpfosten auf. Letzterer wird verdrehsicher im Implantatkörper mit einem speziellen Spannmittel befestigt. Auf den Implantatpfosten wird direkt oder indirekt eine, die sichtbare Zahnkrone bildende Suprastruktur, z.B. durch Verkleben, aufgesetzt. Wird anstelle der Zahnkrone eine Brücke, eine Teil- oder Vollprothese benötigt, werden letztere durch mehrere Kombinationen aus Implantatkörpern und Suprastruktuträgern gebildet.

Aus der WO 2012/039 819 A1 ist ein Zahnimplantataufbausystem bekannt, bei dem ein Suprastrukturträger ohne Implantatpfosten mittels einer Abutmentschraube an einem Implantatkörper befestigt ist. Um einen prothesentragenden Implantantpfosten am Suprastrukturkörper mittels Schraubverbindung befestigen zu können, ist am Supratrukturtäger ein gegen die Mittelline des Implantatkörpers geneigter Implantatteller mit zentralem Innengewinde ausgebildet. Damit weist der Suprastrukturkörper zwei verschiedene Bohrungen auf, die in drei Öffnungen des Suprastrukturträgers enden.

Aus der DE 203 03 653 U1 ist eine Verbindunganordnung mit einem Basisteil und mit einem Abutment bekannt. Diese beiden Teile sind mittels einer Basisschraube miteinander gefügt. Am Abutment kann eine Krone oder ein anderes Prothetikteil befestigt werden.

Die US 2017/0231726 offenbart ein Abutmentsystem, wobei ein abgewinkeltes Abutment mittels eines Gewindebolzens im Implantatkörper befestigt ist. Der Gewindebolzen hat zwei einander gegenläufige Gewinde, wahlweise mit unterschiedlicher Gewindesteigung.

Aus der DE 101 01 907 A1 ist ein System aus einem Implantat, einem Aufbaupfosten und einem Suprastrukturträger bekannt, die mittels zweier identischer Schraubbolzen mit gegenläufigen Gewinden miteinander verbunden sind.

Der vorliegenden Erfindung liegt die Problemstellung zugrunde, eine Systemmontageschnittstelle zwischen einem Suprastrukturträger und einem Implantatkörper so zu verbessern, dass zum einen bei einfacher Vor- und Endmontage ein sicheres Tragen der Suprakonstruktion gewährleistet ist und dass zum anderen bei mehreren eine Teil- oder Totalprothese tragenden Implantatkörpern trotz statischer Überbestimmtheit keine messbaren Verspannungen auftreten.

Diese Problemstellung wird mit den Merkmalen des Patentanspruchs 1 gelöst. Dabei besteht der Suprastrukturträger aus einem Suprastrukturhauptträger und aus einem mit ihm lösbar verschraubten Aufsatzträger. Der Suprastrukturhauptträger hat eine zum Aufsatzträger und zum Implantatkörper hin offene Ausnehmung. In der Ausnehmung ist in ihrem dem Implantatkörper zugewandten Bereich ein Antriebsinnengewinde angeordnet. Der Implantatschraubbolzen weist zwei mit oder ohne Abstand hintereinander angeordnete Außengewinde auf, von denen das erste ein Antriebsaußengewinde und das zweite ein Spannaußengewinde ist. Beide Außengewinde weisen unterschiedliche Steigungen bei gleichem oder unterschiedlichem Steigungsvorzeichen auf. Das Antriebsaußengewinde passt in das Antriebsinnengewinde der Ausnehmung des Suprastrukturhauptträgers und das Spannaußengewinde passt in das Spanninnengewinde des Implantatkörpers. Der Aufsatzträger hat eine zur Suprakonstruktion und zum Suprastrukturhauptträger hin offene Ausnehmung. In der Ausnehmung ist in ihrem dem Suprastrukturhauptträger zugewandten Bereich ein Antriebsinnengewinde angeordnet. Zwischen dem jeweiligen Suprastrukturhauptträger und dem darauf aufgesetzten Aufsatzträger befindet sich ein Aufsatzschraubbolzen mit gegenläufigen Antriebsaußengewinde und Spannaußengewinde. Außerdem greift das Antriebsaußengewinde des Aufsatzschraubbolzens in das Antriebsinnengewinde des Aufsatzträgers ein.

Mit der Erfindung wird eine Systemmontageschnittstelle geschaffen, die einen Implantatkörper über einen Suprastrukturhauptträger und einen Aufsatzträger mit einer Suprakonstruktion verbindet. Dabei können die Suprastrukturhauptträger und die Aufsatzträger zwischen dem Implantatkörper und der Suprakonstruktion zum einen gegenseitig in den Montagefugen verschwenkt werden. Zum anderen gibt es eine Vielzahl von Suprastrukturhauptträgern und Aufsatzträgern, die sich untereinander nur dadurch unterscheiden, dass sie verschiedene Abwinkelungen aufweisen. Auf diese Weise bilden der Implantatkörper, der Suprastrukturhauptträger und der Aufsatzträger einen über Schraubbolzen und/oder Schrauben aneinandergereihten - in der Regel nicht geradlinig verlaufenden - Träger mit zwei Montagefugen. Alle drei im Wesentlichen rohrförmigen Bauteile sind bis auf eine endseitige Öffnung, in deren Innengewinde die Suprakonstruktion mittels Schraubbolzen oder Schraube gehalten wird, ringsherum geschlossen, sodass entlang dem neu geschaffenen Träger nahezu keine die Bauteilfestigkeit negativ beeinträchtigenden Kerbwirkungen entstehen.

Selbstverständlich kann in der ersten Montagefuge der Schraubbolzen gegen eine mit einem Schraubenkopf versehene Schraube ausgetauscht werden.

Weitere Einzelheiten der Erfindung ergeben sich aus den Unteransprüchen und der nachfolgenden Beschreibung schematisch dargestellter Ausführungsformen.
- Figur 1:: Längsschnitt durch eine Systemmontageschnittstelle einer implantatgetragenen Totalprothese;
- Figur 2:: Längsschnitt durch einen prothetischen Zahnersatz in Form einer Teilprothese;
- Figur 3:: Längsschnitt durch eine Systemmontageschnittstelle mit mehrfacher Abknickung;
- Figur 4:: perspektivische Ansicht zu Figur 3;
- Figur 5:: perspektivische Ansicht eines langen Implantatschraubbolzens;
- Figur 6:: perspektivische Ansicht einer Aufsatzträgerschraube;
- Figur 7:: perspektivische Ansicht eines kurzen Implantatschraubbolzens;
- Figur 8:: perspektivische Ansicht eines Aufsatzträgerschraubbolzens;
- Figur 9:: perspektivische Ansicht eines Suprastrukturhauptträgers mit Konuspfosten;
- Figur 10:: perspektivische Ansicht eines geraden Suprastrukturhauptträgers mit Kugelpfosten;
- Figur 11:: wie Figur 10, jedoch mit abgewinkelter Ausnehmung zur Aufnahme eines Aufsatzträgerbefestigungsmittels;
- Figur 12:: wie Figur 11, jedoch mit größerer Abwinkelung;
- Figur 13:: perspektivische Ansicht eines geraden Aufsatzträgers mit Abstützteller;
- Figur 14:: wie Figur 13, jedoch mit abgewinkeltem Aufsatzträgerpfosten;
- Figur 15:: wie Figur 14, jedoch mit stärker abgewinkeltem Aufsatzträgerpfosten;
- Figur 16:: Längsschnitt zu Figur 15;
- Figur 17:: perspektivische Ansicht eines geraden Aufsatzträgers ohne Abstützteller;
- Figur 18:: wie Figur 17, jedoch als abgewinkelter Aufsatzträger;
- Figur 19:: wie Figur 18, jedoch mit stärkerer Abwinkelung;
- Figur 20:: perspektivische Ansicht eines geraden Abtaststifts mit Verdrehsicherung;

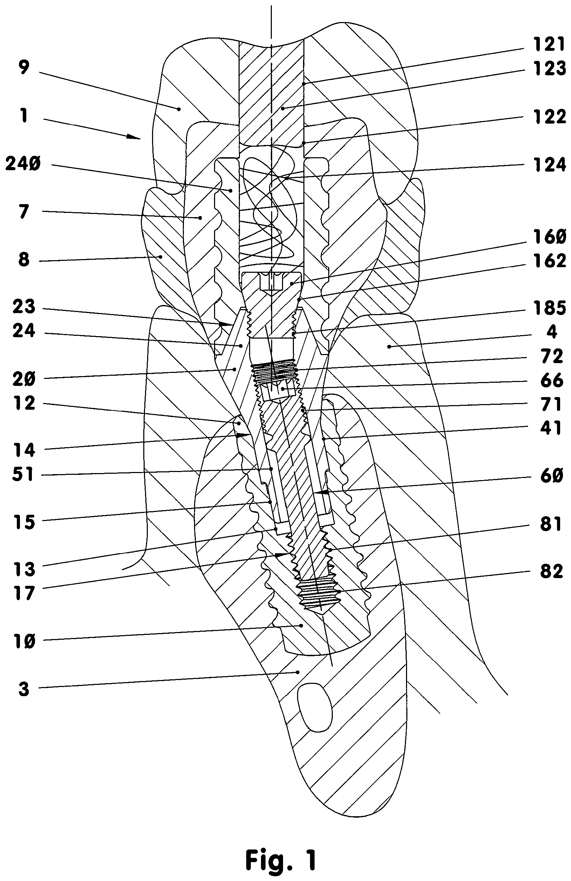

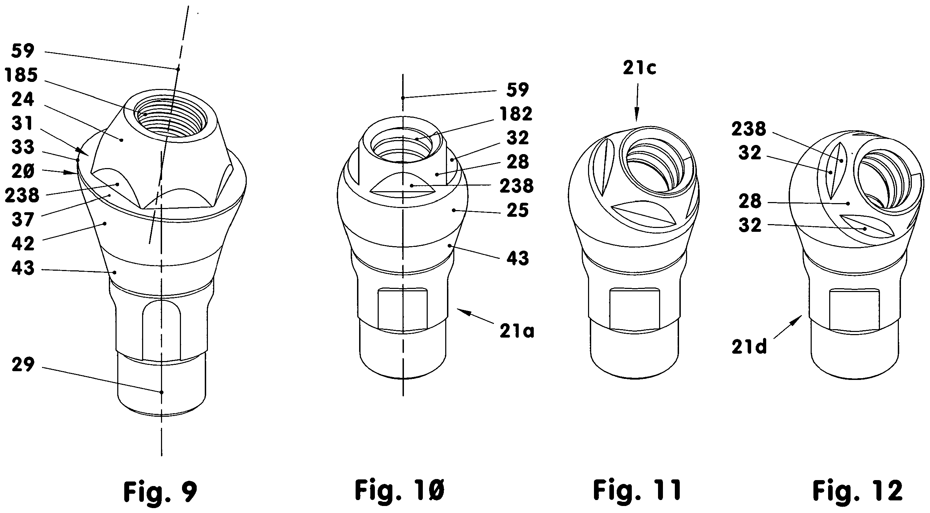

Die Figur 1 zeigt einen prothetischen Zahnersatz (1) in Form einer Totalprothese. Letztere ist auf mehreren im Kieferknochen (3) eingeschraubten Implantatkörpern (10) aufgebaut. Der gezeigte Kieferknochenschnitt liegt - vom Patient aus betrachtet - im Bereich der Backenzähne der rechten Kieferseite. Der Schnitt ist z.B. senkrecht zur Kauebene orientiert. Im Implantatkörper (10) sitzt in einem Konussitz (14) ein z.B. abgewinkelter Suprastrukturhauptträger (20), vgl. auch Figur 9. Der Suprastrukturhauptträger (20) wird mit Hilfe eines speziellen Schraubbolzens (60) im Konussitz (14) gehalten. Auf dem einzelnen Suprastrukturhauptträger (20) sitzt - mittels einer Aufsatzträgerschraube (160) verschraubt - ein Aufsatzträger (240). Der Aufsatzträger (240) ist Teil einer formsteifen Metall- oder Kunststoffarmierung (7). In der Armierung (7) sind die z.B. aus einer Keramik gefertigten Kronen (9) verankert. Zwischen dem Zahnfleisch (4) und der Krone (9) umgibt die Armierung (7) ein elastischer Kunststoff als Nachbildung des die Kronen (9) umgebenden künstlichen Zahnfleisches (8).

Zur Reinigung und zu Wartungszwecken wird die Totalprothese in einem z.B. halbjährlichen Zyklus von den Suprastrukturhauptträger (20) gelöst. Um das zu ermöglichen, sind die Aufsatzträgerschrauben (160) mit geringem Aufwand zugänglich. Dazu sind im Zahnersatz (1) die über den Implantatkörpern (10) angeordneten Kronen (9) jeweils mit einer Bohrung (121) versehen, an die sich nach Figur 1 z.B. in der Armierung (7) eine Bohrung (122) anschließt. Die Bohrung (121) und ein Teil der Bohrung (122) sind mit einem Verschlusspfropfen (123) aus einem unter UV-Licht ausgehärteten Kunststoff verschlossen. Zwischen dem Verschlusspfropfen (123) und der Aufsatzträgerschraube (160) ist in der zentralen Bohrung (244) des Aufsatzträgers (240) als Füllmaterial ein Teflonband (124) verstemmt.

Nach einem problemlosen Aufbohren des Verschlusspfropfens (123) kann das Teflonband (124) herausgezogen werden, um danach die Aufsatzträgerschraube (160) lösen zu können.

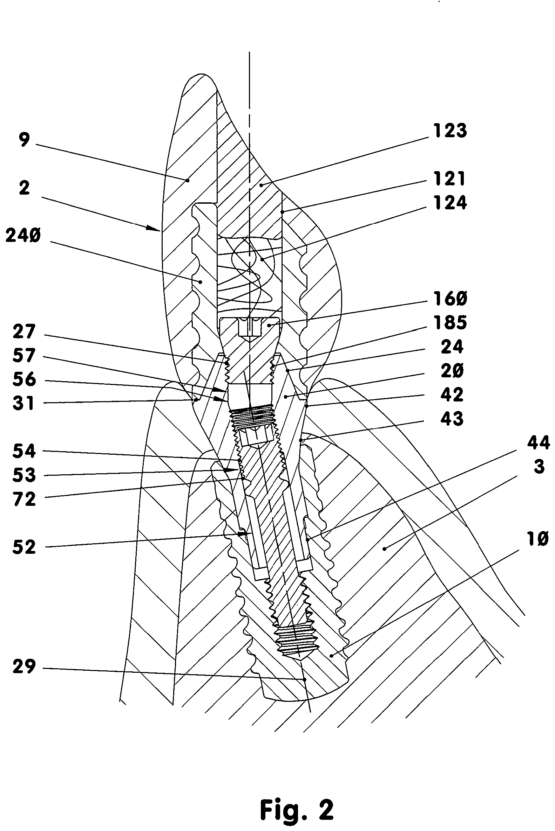

Die Figur 2 zeigt als prothetischen Zahnersatz z.B. eine Brücke (2), die beispielsweise aus zwei bis vier Schneidezähnen besteht. Der Unterkieferlängsschnitt verläuft durch einen der vorderen Schneidezähne, der mittels des Implantatkörpers (10) im Kieferknochen (3) abgestützt ist. Hier ist die Krone (9) direkt auf dem kurzen Aufsatzträger (240) aufgebaut. Das Verschließen der Bohrungen (121, 122) erfolgt wie zuvor schon beschrieben.

Die Basis des prothetischen Zahnersatzes (1) ist ein in den Kieferknochen einschraubbarer Implantatkörper (10). Er ist eine Hohlschraube mit einem ggf. selbstschneidenden, z.B. nichtmetrischen Außengewinde. Circa in der oberen Hälfte weist der Implantatkörper (10) die mehrstufige Ausnehmung (13) auf, die in drei Zonen aufgeteilt ist, vgl. Figuren 1, 2 und 3. Die erste Zone (14) - sie liegt im Bereich der Implantatschulter (12) des Implantatkörpers (10) - ist ein Innenkonus, der einen Kegelwinkel von z.B. 18 Winkelgraden aufweist. Der Innenkonus (14) geht in einen als Verdrehsicherung (44) dienenden Innensechskant (15) der zweiten Zone über. Anstelle des Innensechskants (15) kann als Kupplungsgeometrie z.B. auch ein Doppelinnensechskant oder eine andere form- oder kraftschlüssige Verdrehsicherungsgeometrie verwendet werden. Die erste und die zweite Zone (14, 15) bilden die erste Montagefuge (41).

Die dritte Zone (17) ist eine Gewindebohrung mit einem Spanninnengewinde (82), das bei der Montage den den Suprastrukturhauptträger (20) haltenden Schraubbolzen (60) aufnimmt. Das rechtssteigende Spanninnengewinde (82) ist beispielsweise ein M 1,6 × 0,35-Gewinde nach DIN 13, Blatt 1.

Der Suprastrukturhauptträger (20) hat primär die Aufgabe - im Implantatkörper (10) sitzend - als erste Basis für die künstliche Zahnkrone (1, 2) zu dienen. Er hat einen Bereich, der dem Implantatkörper (10) und einen Bereich, der dem Aufsatzträger (240) zugewandt ist.

Der dem Implantatkörper (10) zugewandte Bereich ist der Implantathals (42) mit seinem Außenkonus (43) und seinem Außensechskant (44). Der Außenkonus (43) und der Außensechskant (44) sitzen passgenau in der Ausnehmung (13) des Implantatkörpers (10). In der zur Spitze des Implantatkörpers (10) weisenden axialen Richtung kontaktieren die Stirnflächen des Außensechskants (44) die Ausnehmung (13) nicht.

Oberhalb des Implantathalses (42) schließt sich ein Implantatteller (31) an, der ggf. mit einem stetigen Übergang aus dem Implantathals (42) hervorgeht. Der Implantatteller (31) hat zumindest bereichs- oder abschnittsweise die Form einer Ebene oder die Form eines Kegelstumpfmantels, dessen Konuswinkel sich zur Zahnkrone (9) hin öffnet. Beispielsweise besteht die Unterseite des Implantattellers (31) auch aus mehreren auseinander hervorgehenden Kegelkoni, wobei jeder gegenüber der Mittellinie (29) einen anderen Winkel einschließt. Der äußere Rand (33) des Implantattellers (31) hat hier einen Abstand zur Mittellinie (29), der bei einer 360°-Rotation um die Mittellinie (29) z.B. 4,5 mm beträgt.

Oberhalb des Implantattellers (31), der eine flächige Randoberseite (37) hat, erhebt sich ein konusförmiger Implantatpfosten (23). Die flächige Randoberseite (37) bildet ggf. eine Aufsitzfläche für den Aufsatzträger (240). Der Implantatpfosten (23) ist gemäß den Figuren 1 und 2 ein Kegelpfosten (24), der eine Verdrehsicherung (238) in Form eines Außensechskants aufweist. Die Flächen des Außensechskants sind entweder parallel zur Mittellinie (59) orientiert oder sie sind Teilflächen einer mit sechs Kanten ausgestatteten geraden Pyramide. Der Kegelpfosten (24) und die Verdrehsicherung (238) bilden eine zentrierende zweite Montagefuge (239).

Ggf. ist der Suprastrukturhauptträger (20) zumindest oberhalb des Implantattellers (31) mit einer Titannitridbeschichtung ausgestattet. Ihre Schichtdicke beträgt z.B. 1 bis 4 µm. Alternativ können dort auch dünnwandige Keramik- oder Copolymerbeschichtungen aufgetragen sein.

Nach den Figuren 1 und 2 hat der Suprastrukturhauptträger (20) eine durchgehende Ausnehmung (51), die im oberen Bereich eine Knickstelle mit einem Knickwinkel von z.B. 11 Winkelgraden aufweist. Die fertig bearbeitete Ausnehmung (51) besteht aus vier Zonen. Die erste (52) und die zweite Zone (53) dienen dem Einführen des Schraubbolzens (60). Die erste, untere Zone (52) ist eine zylindrische Bohrung. Ihre Mittellinie (49) deckt sich mit der Mittellinie (29). An sie schließt sich als zweite Zone (53) z.B. ein rechtsgängiges Innengewinde (72) an, das nach DIN 13, Blatt 2 mit M 1,8 × 0,2 bezeichnet wird. Den Übergang zwischen dem Innengewinde (72) und der Bohrung (52) bildet ein planer Anschlagbund (54).

Die vierte, obere Zone (57) ist ebenfalls eine zylindrische Bohrung mit einem Innengewinde (27). Ihre Mittellinie (59) schneidet die Mittellinie (29) in der dritten Zone (56), z.B. unter einem Winkel von 11 Winkelgraden. Die obere Zone (57) dient zum einen der Einführung des Werkzeuges, mit dem der Schraubbolzen (60) angezogen wird. Zum anderen ist sie auch Sitz der Aufsatzträgerschraube (160). Die dritte Zone (56) stellt einen ausgerundeten Übergangsbereich dar, der z.B. Bereiche der Mantelfläche einer Halbkugel aufweist.

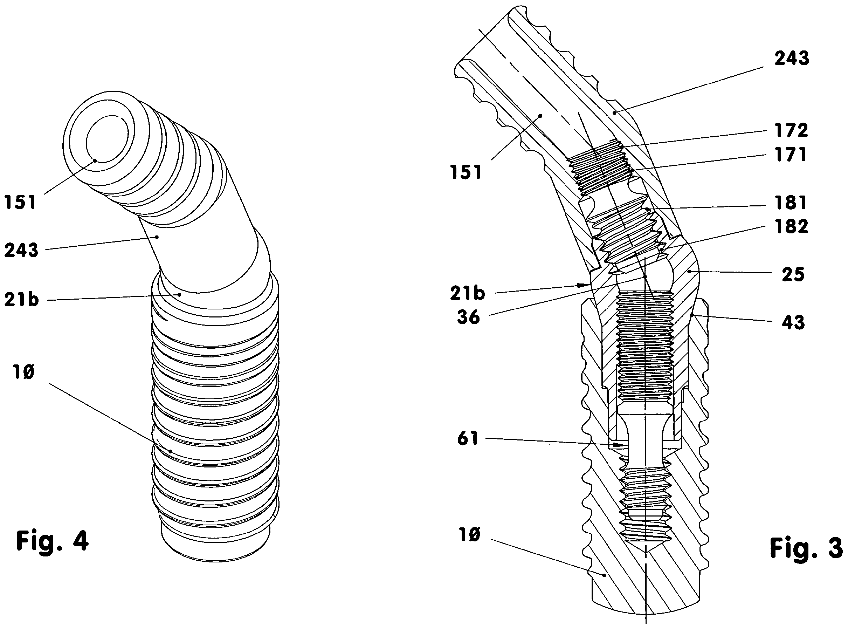

Das System nach den Figuren 3 und 4 verwendet einen Suprastrukturhauptträger (21b) der aufsatzträgerseitig in einem Kugelpfosten (25) endet. Der Implantatkonus (43) geht tangential - ohne Sprung, Kante oder Implantatteller - in die Kugelform des Kugelpfostens (25) über. Die Mittellinie (59) schließt mit der Mittellinie (29) im Schnittpunkt (36) einen Winkel von 158 Winkelgraden ein. Somit beträgt der Knickwinkel bzw. die Abwinkelung der Mittellinie (59) gegenüber der Mittellinie (29) 11 Winkelgrade. Der Schnittpunkt (36) ist zugleich der Mittelpunkt der Kugelform des Kugelpfostens (25). Dies betrifft sowohl die Außenwandung als auch die Wandung seiner zentralen Ausnehmung.

In den Figuren 10-12 sind drei weitere Suprastrukturhauptträger (21a, 21c, 21d) dieser Serie dargestellt.

Die Figur 10 zeigt einen geraden Suprastrukturhauptträger (21a), bei dem die Mittellinie des Kugelpfostens (25) mit der Mittellinie des Strukturhauptträgers (21a) übereinstimmt. Der Kugelpfosten (25) endet, gemäß der Figur 3, zum Aufsatzträger (243) hin in einem Konussitz (28), in den vier Kerben eingearbeitet sind. Die Mantellinien des Mantels des Konussitzes (28), die sich in einem Punkt der Mittellinie (59) schneiden, liegen tangential an der Kugeloberfläche des Kugelpfostens (25) an.

Die Kerben weisen vier Flanken auf, deren Flächennormalen zum einen parallel zur Mittellinie (59) orientiert sind und zum anderen in einer Ebene liegen. Diese vier Flanken bilden als Tellersegmente (32) einen in die Hüllgeometrie des Konussitzes (28) integrierten Implantatteller. Sie sind in der Summe vergleichbar mit der Randoberseite (37) des Suprastrukturhauptträgers (20). Die vier anderen Flanken der Kerben liegen in Ebenen, die parallel zur Mittellinie (59) ausgerichtet sind und Teil der Seitenflächen eines gedachten Würfels darstellen. Diese Flanken, die von der Mittellinie (59) gleich weit entfernt sind, bilden die Verdrehsicherung (238).

Der in Figur 11 abgebildete Suprastrukturhauptträger (21c) weist eine 30°-Abwinkelung auf, während der Suprastrukturhauptträger (21d) der Figur 12 eine 45°-Abwinkelung zeigt. Selbstverständlich gibt es auch einen Suprastrukturhauptträger dieser Serie mit einer 11°-Abwinkelung. Die Abwinkelung der einzelnen Suprastrukturhauptträger kann auch in Drei- oder Fünfwinkelgradschritten ausgeführt werden.

Der einzelne Schraubbolzen (60, 61) ist in der Regel in vier Bereiche aufgeteilt. Diese sind von vorn nach hinten aneinandergereiht ein Anlenkbereich (63), ein Antriebsbereich (70), ein Zwischenbereich (75) und ein Spannbereich (80), vgl. Figu-ren 5 und 7.

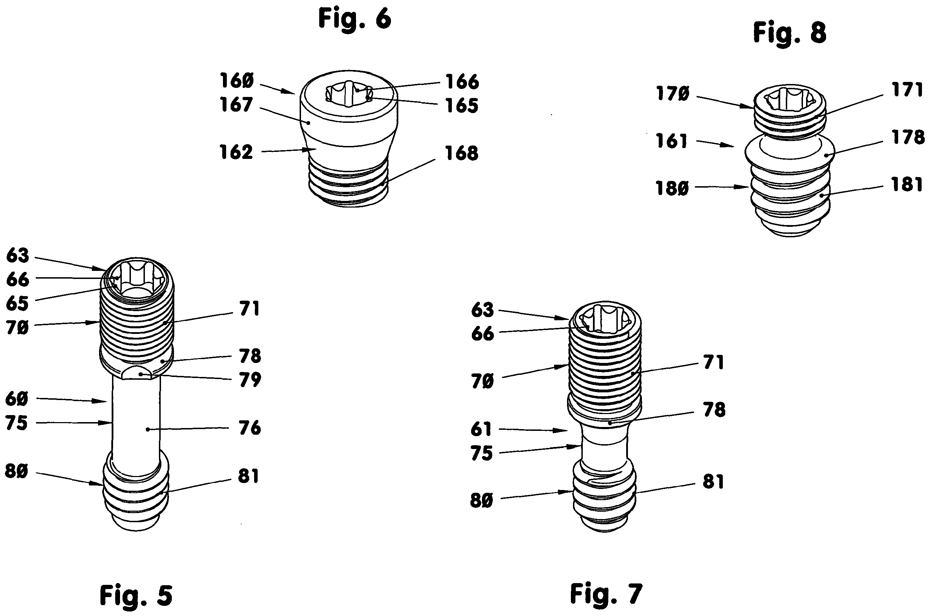

In den Anlenkbereich (63) ist eine Werkzeugausnehmung (65) eingearbeitet. Sie ist nach den Figuren 5 und 7 z.B. ein Innensechsrund (66) mit einer Schlüsselweite von z.B. 1,28 mm. Anstelle des Innensechsrunds kann auch ein Innensechskant, ein Innenvielzahn, ein Kreuzschlitz, ein Schlitz oder dergleichen vorgesehen sein. Eine andere Antriebsvariante stellt ein Außensechsrund oder Außensechskant dar. Ggf. sind die Sechsrund- oder Sechskantformen in Axialrichtung tonnenförmig abgerundet.

Der Antriebsbereich (70) weist nach den Figuren 5 und 7 ein Feingewinde des Typs M 1,8 × 0,2 auf. Andere Feingewinde als Antriebsgewinde (71, 72) wie z.B. M 2 × 0,25, M 1,8 × 0,2, M 1,6 × 0,25 oder M 1,6 × 0,2 sind ebenfalls denkbar.

Der an den Antriebsbereich (70) anschließende Zwischenbereich (75) dient als Abstandshalter zum nachfolgenden Spannbereich (80). Der Zwischenbereich (75), nach Figur 5, setzt sich aus einem Zylinderzapfen (76) und einem Anschlagflansch (78) zusammen. Ggf. entspricht der Außendurchmesser des Zylinderzapfens (76) dem Kerndurchmesser des Antriebsaußengewindes (71).

Zum Spannbereich (80) hin schließt sich an den Zylinderzapfen (76) ein scheibenförmiger Anschlagflansch (78) an. Der Anschlagflansch (78) hat eine Wandstärke von z.B. 0,2 mm bei einem Außendurchmesser von z.B. 1,8 mm. Der Anschlagflansch (78) weist parallel zur Schraubenmittellinie eine Kerbe (79) auf, die die Entlüftung der Gewindebohrung des Implantatkörpers (10) ermöglicht.

Der Spannbereich (80) stellt ein Spannaußengewinde (81) dar. Es ist hier z.B. ein 1,46 mm langes M 1,6 × 0,35-Regelgewinde nach DIN 13, Blatt 1.

Figur 1 zeigt den Suprastrukturhauptträger (20) nach dem Einsetzen des Schraubbolzens (60). Für die Montage wird der Schraubbolzen (60) mit seinem Antriebsaußengewinde (71) in den Bereich des Antriebsinnengewindes (72) eingeschraubt, bis der Anschlagflansch (78) des Schraubbolzens (60) am Anschlagbund (54) anliegt, vgl. Figuren 1, 2 und 3. Nun sitzt der Schraubbolzen (60) verliersicher im Suprastrukturhauptträger (20) in seiner hinteren Position. In dieser Form kann die Kombination aus dem Suprastrukturhauptträger (20) und dem Schraubbolzen (60) in den Handel gelangen.

Nach dem Einsetzen des Suprastrukturhauptträgers (20) in die gestufte Ausnehmung (13) wird das Spannaußengewinde (81) in das Spanninnengewinde (82) des Implantatkörpers (10) durch eine Rechtsdrehung des Sschraubbolzens (60) eingeschraubt. Hierdurch wird der Suprastrukturhauptträger (20) in den Implantatkörper (10) hineingezogen. Der Einschraubvorgang ist beendet, sobald der Implantatkonus (43) fest im Innenkonus (14) des Implantatkörpers (10) sitzt. Alle vier Gewindegänge des Spannaußengewindes (81) sitzen im Spanninnengewinde (82). Ebenso liegen die Mehrzahl der Gewindegänge des Antriebsaußengewindes (71) im Antriebsinnengewinde (72).

Der Schraubbolzen (61) der Figur 7 dient der Befestigung des Suprastrukturhauptträgers (21a, 21b, 21c, 21d) im Implantatkörper (10), vgl. Figuren 3 und 4. Er ist mit dem Schraubbolzen (60) weitgehend vergleichbar. Im Wesentlichen ist der Zwischenbereich (75) kürzer ausgebildet.

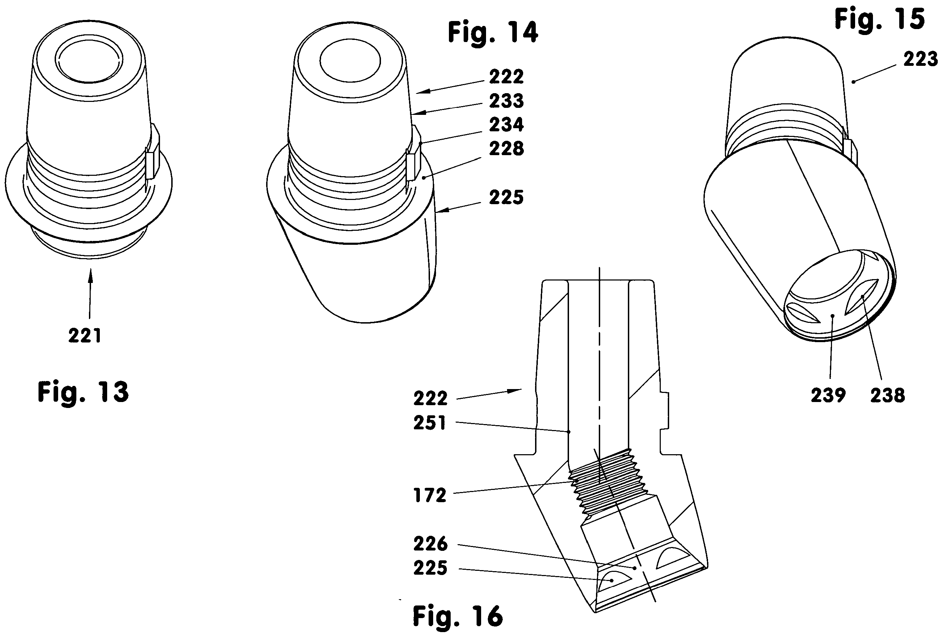

In den Figuren 13-16 ist eine aus drei Aufsatzträgern (221-223) bestehende Aufsatzträgergruppe dargestellt. Jeder dieser Aufsatzträger (221-223) weist einen Basisabschnitt (225), einen Aufsatzträgerteller (228) zur Abstützung einer Suprakonstruktion (1, 2) und einen Aufsatzträgerpfosten (233) auf.

Alle Aufsatzträger (221-223) dieser Gruppe sind geeignet, auf den Suprastrukturhauptträgern (21a-21d) angeordnet zu werden. Zwischen dem jeweiligen Suprastrukturhauptträger und dem darauf aufgesetzten Aufsatzträger befindet sich ein Aufsatzschraubbolzen (161) mit gegenläufigen Gewinden.

Der Aufsatzschraubbolzen (161) ist in Figur 8 dargestellt. Er ist ähnlich aufgebaut wie die Schraubbolzen (60) und (61).

Zwischen einem Antriebsbereich (170) und einem Spannbereich (180) befindet sich ein Anschlagflansch (178), dessen Durchmesser größer ist als der maximale Gewindedurchmesser des Spannbereichs (180). Das Antriebsaußengewinde (171) entspricht nach DIN 13 einem M 1,6 × 0,2-Gewinde. Das im Durchmesser größere Spannaußengewinde (181) ist ein M 1,8-Regelgewinde. Die in den Antriebsbereich (170) eingearbeitete Werkzeugausnehmung ist beispielsweise ein Innensechsrund.

Alle in den Ausführungsbeispielen gezeigten Gewinde sind metrische Gewinde nach DIN 13. Anstelle der metrischen Gewinde können auch Trapezgewinde, Flachgewinde, Sägengewinde, Rund- bzw. Milchgewinde, Rohrgewinde, Whitworth-Gewinde, UNF/UNC-Gewinde oder dergleichen verwendet werden. Alle Schraubbolzen (60, 61) sind beispielsweise aus TiAL6V4 oder TiAl6V4 ELI gefertigt.

Der Basisabschnitt (225) des jeweiligen Aufsatzträgers verbreitert sich von der unteren Stirnfläche hin zum Aufsatzträgerteller (228). Der sich oberhalb des Aufsatzträgertellers befindende Aufsatzträgerpfosten (233) hat im Wesentlichen die Form eines sich nach oben - also weg vom Aufsatzträgerteller (228) - verjüngenden geraden Konus. Der Aufsatzträgerpfosten (233) weist im unteren Drittel mehrere umlaufende Rillen auf, die durch einen seitlich vorstehenden Verdrehsicherungssteg (234) unterbrochen werden. Dadurch entsteht eine verdrehsichere Basis für die zu tragende Suprakonstruktion (1, 2).

Alle Aufsatzträger (221-123) haben eine durchgehende mehrfach gestufte Ausnehmung (251), die im unteren Bereich eine Konussitz (226) aufweist, vgl. Figur 16. Im Konussitz (226) befinden sich z.B. vier Stege (227), die formschlüssig in die Kerben der Verdrehsicherung (32, 238) passen. Der Konussitz (226) mündet in eine kurze zylindrische Ausnehmung zur Aufnahme des Spannbereichs (180) des Aufsatzschraubbolzens (161), vgl. Figur 3. An die zylindrische Ausnehmung schließt sich das Antriebsinnengewinde (172) an, in das das Antriebsaußengewinde (171) des Aufsatzschraubbolzens (161) eingreift. Der Durchmesser der zylindrischen Ausnehmung ist größer als der Kerndurchmesser des Antriebsinnengewindes (172) des Aufsatzschraubbolzens (161). Dadurch entsteht ein Anschlagbund, an dem bei der Vormontage des Aufsatzschraubbolzens (161) dessen Anschlagflansch (178) zur Anlage kommt.

Der Basisabschnitt (225) des Aufsatzträgers (222) ist gegenüber dem Aufsatzträgerpfosten (233) um elf Winkelgrade abgewinkelt. Beim Aufsatzträger (223) beträgt diese Abwinkelung 22 Winkelgrade.

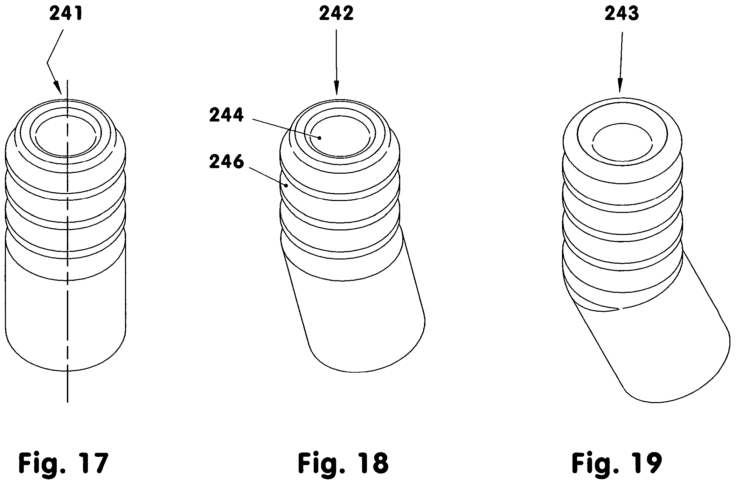

Die Figuren 17 bis 20 zeigen die Aufsatzträger (241-243). Alle diese Aufsatzträger bestehen aus einem geraden oder einem zylindrischen Rohr, das im unteren Bereich glattwandig und dem oberen Bereich mit z.B. umlaufenden Rillen (246) ausgestattet ist. Das Rohr hat einen Außendurchmesser von z.B. 3,24 mm. Die Rillen haben im Ausführungsbeispiel einen Radius von 0,45 mm. Die Teilung von Rille zu Rille beträgt 1,1 mm. Der kleinste Innendurchmesser des Rohres beträgt 1,62 mm.

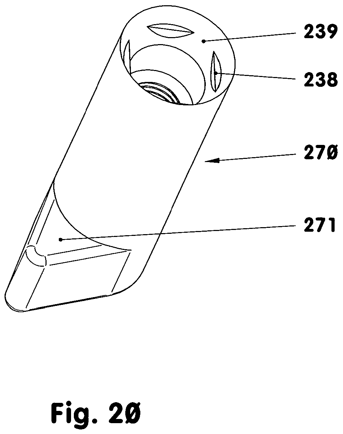

Gemäß Figur 18 ist der glattwandige Bereich des Aufsatzträgers (242) gegenüber dem mit Rillen ausgestatteten Bereich um elf Winkelgrade abgewinkelt ausgeführt. Bei Figur 19 beträgt die Abwinkelung 22 Winkelgrade. Die Geometrieform der zweiten Montagefuge der Aufsatzträger (241-243) entspricht der Geometrieform der Aufsatzträger (221-223). Vergleichbares gilt für die in Figur 20 dargestellte Abtastlehre (270). Letztere weist an ihrem freien Ende einen einseitig radial abstehenden Abtastzahn (271) auf. Der abscannbare, 2,5 mm dicke Abtastzahn (270) hat zwei parallele Stirnflächen und zwei einen 40°-Winkel einschließende Zahnflanken.

Mithilfe beliebiger Kombinationen aus geraden oder abgewinkelten Suprastrukturhauptträgern (20; 21a-21d) und geraden oder abgewinkelten Aufsatzträgern (221-223; 240-243) können bei Berücksichtigung der Tatsache, dass die Träger auch gegeneinander verdreht positioniert werden können, eine Vielzahl von Winkelstellungen zwischen dem Implantatkörper und der Lage der Aufsatzträger erzeugt werden. Die Zahl der Winkelstellungen vergrößert sich zudem, wenn in dem einen oder anderen Fall die Verdrehsicherung zwischen dem einzelnen Suprastrukturhauptträger (20; 21a-21d) und dem einzelnen Aufsatzträger (221-223; 240-243) weggelassen wird.

### Bezugszeichenliste:

- 1: Zahnersatz, prothetisch, Teil- oder Totalprothese, Suprakonstruktion
- 2: Zahnersatz, prothetisch, Brücke, Suprakonstruktion
- 3: Kieferknochen
- 4: Zahnfleisch
- 7: Gerüst, Armierung
- 8: Zahnfleischnachbildung, elastisch
- 9: Krone

- 10: Implantatkörper
- 12: Implantatschulter
- 13: Ausnehmung, gestuft
- 14: Innenkonus, erste Zone, Konus, Konussitz
- 15: Innensechskant, zweite Zone, Kupplungsgeometrie
- 17: Gewindebohrung, dritte Zone für (82)

- 20: Suprastrukturhauptträger zu Schraubbolzen (60)
- 21a: Suprastrukturhauptträger zu Schraubbolzen (61), gerade
- 21b: Suprastrukturhauptträger zu Schraubbolzen (61), 22°-Abwinkelung
- 21c: Suprastrukturhauptträger zu Schraubbolzen (61), 30°-Abwinkelung
- 21d: Suprastrukturhauptträger zu Schraubbolzen (61), 45°-Abwinkelung

- 23: Implantatpfosten
- 24: Kegelform, Hohlkegel, Kegelpfosten
- 25: Kugelform, Hohlkugel, Kugelpfosten
- 27: Innengewinde für (160)
- 28: Konussitz, Teile einer Kerbe, Verdrehsicherung
- 29: Mittellinie

- 31: Implantatteller
- 32: Tellersegmente, Teil einer Kerbe
- 33: Rand
- 36: Mittelpunkt, Schnittpunkt
- 37: Randoberseite, flächig

- 41: erste Montagefuge
- 42: Implantathals
- 43: Implantatkonus, Außenkonus
- 44: Verdrehsicherung, Außensechskant, Kupplungsgeometrie

- 51: Ausnehmung, ggf. geknickt
- 52: erste, untere Zone, untere Ausnehmung
- 53: zweite Zone, untere Ausnehmung
- 54: Anschlagbund
- 56: dritte Zone, Halbkugelmantelfläche
- 57: vierte, obere Zone; Bohrung, zylindrisch
- 59: Mittellinie von (56, 57)

- 60: Schraubbolzen mit Anschlagflansch, lang
- 61: Schraubbolzen mit gegenläufigen Gewinden
- 63: Anlenkbereich
- 65: Werkzeugausnehmung
- 66: Innensechsrund, Innensechskant

- 70: Antriebsbereich
- 71: Antriebsaußengewinde, Außengewinde, Antriebsgewinde, Linksgewinde
- 72: Antriebsinnengewinde, Innengewinde, Antriebsgewinde, Linksgewinde
- 73: Antriebspaarung, Antriebsgewinde, Paarung

- 75: Zwischenbereich
- 76: Zylinderzapfen
- 78: Anschlagflansch, Anschlagbund
- 79: Kerbe

- 80: Spannbereich
- 81: Spannaußengewinde, Außengewinde, Spanngewinde
- 82: Spanninnengewinde, Innengewinde, Spanngewinde
- 83: Spannpaarung, Spanngewinde, Paarung

- 121: Bohrung in (9)
- 122: Bohrung in (7)
- 123: Verschlusspfropfen für (9) und/oder (240)
- 124: Füllmaterial, unverklebt; Teflonband

- 151: Ausnehmung, ggf. geknickt
- 160: Aufsatzträgerschraube mit Kopf, kurz
- 161: Aufsatzschraubbolzen mit gegenläufigen Gewinden; Aufsatzträgerbefestigungsmittel
- 162: Schraubenkopfsitzfläche, konisch
- 165: Werkzeugausnehmung
- 166: Innensechskant
- 167: Schraubenkopf, radial außen zylindrisch
- 168: Außengewinde

- 170: Antriebsbereich
- 171: Antriebsaußengewinde, Außengewinde, Antriebsgewinde, Linksgewinde
- 172: Antriebsinnengewinde, Innengewinde, Antriebsgewinde, Linksgewinde
- 173: Antriebspaarung, Antriebsgewinde, Paarung
- 178: Anschlagflansch, Anschlagbund

- 180: Spannbereich
- 181: Spannaußengewinde, Außengewinde, Spanngewinde
- 182: Spanninnengewinde, Innengewinde, Spanngewinde
- 183: Spannpaarung, Spanngewinde, Paarung
- 185: Außengewinde, Rechtsgewinde

- 221: Aufsatzträger mit Teller, gerade
- 222: Aufsatzträger mit 11°-Abwinkelung
- 223: Aufsatzträger mit 22°-Abwinkelung

- 225: Basisabschnitt
- 226: Konussitz
- 227: Stege
- 228: Aussatzträgerteller

- 233: Aufsatzträgerpfosten
- 234: Verdrehsicherungssteg
- 238: Verdrehsicherung, Außenvierkant, Kupplungsgeometrie
- 239: zweite Montagefuge

- 240: Aufsatzträger, kurz mit Rillen, gerade
- 241: Aufsatzträger, lang mit Rillen, gerade
- 242: Aufsatzträger, lang mit 11°-Abwinkelung
- 243: Aufsatzträger, lang mit 22°-Abwinkelung
- 244: Bohrung, zentral
- 246: Rillen
- 251: Ausnehmung, ggf. geknickt

- 270: Abtastlehre
- 271: Abtastzahn

## Patentansprüche

1. Systemmontageschnittstelle mit einem eine Suprakonstruktion (1, 2) tragenden mehrteiligen Suprastrukturträger (20, 21a-21d; 221-223; 240-243) und einem ein Spanninnengewinde (82) aufweisenden Implantatkörper (10), wobei ein Teil des Suprastrukturträgers (20, 21a-21d; 221-223; 240-243) über einen Implantatschraubbolzen (60, 61) am Implantatkörper (10) angeordnet ist,
- wobei der Suprastrukturträger (20, 21a-21d; 221-223; 240-243) aus einem Suprastrukturhauptträger (20, 21a-21d) und aus einem mit ihm lösbar verschraubten Aufsatzträger (221-223; 240-243) besteht,
- wobei der Suprastrukturhauptträger (20, 21a-21d) eine zum Aufsatzträger (221-223; 240-243) und zum Implantatkörper (10) hin offene Ausnehmung (51) hat,
- wobei in der Ausnehmung (51) in ihrem dem Implantatkörper (10) zugewandten Bereich ein Antriebsinnengewinde (72) angeordnet ist,
- wobei der Implantatschraubbolzen (60, 61) zwei mit oder ohne Abstand hintereinander angeordnete Außengewinde (71, 81) aufweist, von denen das erste ein Antriebsaußengewinde (71) und das zweite ein Spannaußengewinde (81) ist,
- wobei beide Außengewinde (71, 81) unterschiedliche Steigungen bei gleichem oder unterschiedlichem Steigungsvorzeichen aufweisen,
- wobei das Antriebsaußengewinde (71) in das Antriebsinnengewinde (72) der Ausnehmung (51) des Suprastrukturhauptträgers (20, 21a-21d) und das Spannaußengewinde (81) in das Spanninnengewinde (82) des Implantatkörpers (10) passen,
- wobei der Aufsatzträger (221-223; 240-243) eine zur Suprakonstruktion (1, 2) und zum Suprastrukturhauptträger (20, 21a-21d) hin offene Ausnehmung (151) hat,
- wobei in der Ausnehmung (151) in ihrem dem Suprastrukturhauptträger (20, 21a-21d) zugewandten Bereich ein Antriebsinnengewinde (172) angeordnet ist,
- wobei zwischen dem jeweiligen Suprastrukturhauptträger (20, 21a-21d) und dem darauf aufgesetzten Aufsatzträger (221-223; 240-243) sich ein Aufsatzschraubbolzen (161) mit gegenläufigen Antriebsaußengewinde (171) und Spannaußengewinde (181) befindet und
- wobei das Antriebsaußengewinde (171) des Aufsatzschraubbolzens (161) in das Antriebsinnengewinde (172) des Aufsatzträgers (241 - 243) eingreift.

2. Systemmontageschnittstelle gemäß Anspruch 1, **dadurch gekennzeichnet, dass** der Suprastrukturhauptträger (20, 21a-21d) einen Implantatpfosten (23) aufweist, der gegenüber einem Implantatkonus (43) abgewinkelt ausgeführt ist.

3. Systemmontageschnittstelle gemäß Anspruch 2, **dadurch gekennzeichnet, dass** der Implantatpfosten (23) des Suprastrukturhauptträgers (20, 21a-21d) eine Kegel- oder Konusform (24, 25) aufweist.

4. Systemmontageschnittstelle gemäß Anspruch 1, **dadurch gekennzeichnet, dass** der Aufsatzträger (221-223; 240-243) entweder eine gerade hohle Verlängerung des Implantatpfosten (23) ist oder ein abgewinkeltes rohrartiges Bauteil bildet.

5. Systemmontageschnittstelle gemäß Anspruch 1, **dadurch gekennzeichnet, dass** der Implantkörper (10) und der Suprastrukturhauptträger (20, 21a-21d) eine zumindest bereichsweise komplementäre Kupplungsgeometrie (44) zur Sicherung der Verdrehsicherheit einer ersten Montagefuge (41) aufweisen.

6. Systemmontageschnittstelle gemäß Anspruch 1, **dadurch gekennzeichnet, dass** der Suprastrukturhauptträger (20, 21a-21d) und der Aufsatzträger (221-223; 240-243) eine zumindest bereichsweise komplementäre Kupplungsgeometrie (238) zur Sicherung der Verdrehsicherheit in einer zweiten Montagefuge (239) aufweisen.

7. Systemmontageschnittstelle gemäß Anspruch 1, **dadurch gekennzeichnet, dass** die Ausnehmung (51) den Suprastrukturhauptträger (20, 21a-21d) und die Ausnehmung (151) den Aufsatzträger (221-223; 240-243) jeweils zwischen dem vorderen und dem hinteren Ende durchqueren.

8. Systemmontageschnittstelle gemäß Anspruch 1, **dadurch gekennzeichnet, dass** die beiden Antriebsgewinde (71, 72; 171, 172) eine Antriebspaarung (73, 173) und die beiden Spanngewinde (81, 82, 181, 182) eine Spannpaarung (83, 183) bilden,

9. Systemmontageschnittstelle gemäß den Ansprüchen 1 und 8, **dadurch gekennzeichnet, dass** die Gewinde (71, 72) der Antriebspaarung (73) - bei gleichem Steigungsvorzeichen der Gewinde (71, 72, 81, 82) - eine kleinere Steigung als die Gewinde (81, 82) der Spannpaarung (83) haben.

10. Systemmontageschnittstelle gemäß den Ansprüchen 1 und 8, **dadurch gekennzeichnet, dass** die Gewinde (71, 72, 81, 82) beider Paarungen (73, 83) unterschiedliche Steigungsvorzeichen haben.

11. Systemmontageschnittstelle gemäß den Ansprüchen 1, 8 und 10, **dadurch gekennzeichnet, dass** die Gewinde (71, 72; 171, 172) der Antriebspaarung (73, 173) jeweils ein negatives Steigungsvorzeichen haben, also linkssteigende Gewinde (71, 72; 171, 172) sind.

12. Systemmontageschnittstelle gemäß Anspruch 1, **dadurch gekennzeichnet, dass** der Durchmesser des Spannaußengewindes (181) des Aufsatzschraubbolzens (161) größer ist als der Durchmesser seines Antriebsaußengewindes (171).

13. Systemmontageschnittstelle gemäß Anspruch 1, **dadurch gekennzeichnet, dass** der Schraubbolzen (60, 61; 160, 161) zwischen oder - in spannender Einschraubrichtung - hinter den Außengewinden (71, 81; 171, 181) einen Anschlagbund (54, 78; 154, 178) aufweist.

## Claims

1. System assembly interface with a multi-part superstructure carrier (20, 21a-21d; 221-223; 240-243) carrying a superstructure (1, 2) and an implant body (10) having an internal clamping thread (82), wherein a part of the superstructure carrier (20, 21a-21d; 221-223; 240-243) is arranged on the implant body (10) via an implant screw bolt (60, 61),
- wherein the superstructure carrier (20, 21a-21d; 221-223; 240-243) consists of a superstructure main carrier (20, 21a-21d) and of an attachment carrier (221-223; 240-243) detachably screwed to it,
- wherein the superstructure main carrier (20, 21a-21d) has a recess (51) open towards the attachment carrier (221-223; 240-243) and towards the implant body (10),
- wherein an internal drive thread (72) is arranged in the recess (51) in its region facing the implant body (10),
- wherein the implant screw bolt (60, 61) has two external threads (71, 81) arranged one behind the other with or without spacing, of which the first is a drive external thread (71) and the second is a clamping external thread (81),
- wherein both external threads (71, 81) have different pitches with the same or different pitch signs,
- wherein the external drive thread (71) fits into the internal drive thread (72) of the recess (51) of the superstructure main carrier (20, 21a-21d) and the external clamping thread (81) fits into the internal clamping thread (82) of the implant body (10),
- wherein the attachment carrier (221-223; 240-243) has a recess (151) open towards the superstructure (1, 2) and the main superstructure carrier (20, 21a-21d),
- wherein a drive internal thread (172) is arranged in the recess (151) in its region facing the superstructure main carrier (20, 21a-21d),
- wherein between the respective superstructure main carrier (20, 21a-21d) and the attachment carrier (221-223; 240-243) placed thereon there is an attachment screw bolt (161) with an opposing external drive thread (171) and external clamping thread (181), and
- wherein the external drive thread (171) of the attachment bolt (161) engages in the internal drive thread (172) of the attachment carrier (241 - 243).

2. System assembly interface according to claim 1, **characterised in that** the superstructure main carrier (20, 21a-21d) has an implant post (23) which is angled with respect to an implant cone (43).

3. System assembly interface according to claim 2, **characterised in that** the implant post (23) of the superstructure main carrier (20, 21a-21d) has a conical or tapered shape (24, 25).

4. System assembly interface according to claim 1, **characterised in that** the attachment carrier (221-223; 240-243) is either a straight hollow extension of the implant post (23) or forms an angled tubular component.

5. System assembly interface according to claim 1, **characterised in that** the implant body (10) and the superstructure main carrier (20, 21a-21d) have an at least partially complementary coupling geometry (44) for securing the torsion resistance of a first assembly joint (41).

6. System assembly interface according to claim 1, **characterised in that** the superstructure main carrier (20, 21a-21d) and the attachment carrier (221-223; 240-243) have a complementary coupling geometry (238), at least in certain areas, for securing the torsion resistance in a second mounting joint (239).

7. System assembly interface according to claim 1, **characterised in that** the recess (51) passes through the superstructure main carrier (20, 21a-21d) and the recess (151) passes through the attachment carrier (221-223; 240-243) in each case between the front and the rear end.

8. System assembly interface according to claim 1, **characterised in that** the two drive threads (71, 72; 171, 172) form a drive pairing (73, 173) and the two clamping threads (81, 82, 181, 182) form a clamping pairing (83, 183),

9. System assembly interface according to claims 1 and 8, **characterised in that** the threads (71, 72) of the drive pairing (73) - with the same pitch sign of the threads (71, 72, 81, 82) - have a smaller pitch than the threads (81, 82) of the clamping pairing (83).

10. System assembly interface according to claims 1 and 8, **characterised in that** the threads (71, 72, 81, 82) of both pairs (73, 83) have different pitch signs.

11. System assembly interface according to claims 1, 8 and 10, **characterised in that** the threads (71, 72; 171, 172) of the drive pairing (73, 173) each have a negative pitch sign, i.e. are left-climbing threads (71, 72; 171, 172).

12. System assembly interface according to claim 1, **characterised in that** the diameter of the clamping external thread (181) of the top screw bolt (161) is larger than the diameter of its drive external thread (171).

13. System assembly interface according to claim 1, **characterised in that** the screw bolt (60, 61; 160, 161) has a stop collar (54, 78; 154, 178) between or - in the clamping screw-in direction - behind the external threads (71, 81; 171, 181).

## Revendications

1. Interface de montage de système avec un support de superstructure en plusieurs parties (20, 21a-21d ; 221-223 ; 240-243) portant une superstructure (1, 2) et un corps d'implant (10) présentant un filetage intérieur de serrage (82), une partie du support de superstructure (20, 21a-21d ; 221-223 ; 240-243) étant disposée sur le corps d'implant (10) par l'intermédiaire d'un boulon d'implant (60, 61),
- le support de superstructure (20, 21a-21d ; 221-223 ; 240-243) étant constitué d'un support principal de superstructure (20, 21a-21d) et d'un support d'embout (221-223 ; 240-243) vissé de manière amovible avec celui-ci,
- le support principal de superstructure (20, 21a-21d) ayant un évidement (51) ouvert vers le support d'embout (221-223 ; 240-243) et vers le corps d'implant (10),
- un filetage intérieur d'entraînement (72) étant disposé dans l'évidement (51) dans sa zone tournée vers le corps d'implant (10),
- le boulon d'implant (60, 61) présentant deux filetages extérieurs (71, 81) disposés l'un derrière l'autre avec ou sans distance, dont le premier est un filetage extérieur d'entraînement (71) et le deuxième un filetage extérieur de serrage (81),
- les deux filets extérieurs (71, 81) présentant des pas différents avec un signe de pas identique ou différent,
- le filetage extérieur d'entraînement (71) s'adaptant dans le filetage intérieur d'entraînement (72) de l'évidement (51) du support principal de la suprastructure (20, 21a-21d) et le filetage extérieur de serrage (81) s'adaptant dans le filetage intérieur de serrage (82) du corps de l'implant (10),
- le support d'embout (221-223 ; 240-243) ayant un évidement (151) ouvert vers la structure de superconstruction (1, 2) et vers le support principal de superstructure (20, 21a-21d),
- un filet intérieur d'entraînement (172) étant disposé dans l'évidement (151) dans sa zone tournée vers le support principal de superstructure (20, 21a-21d),
- un boulon à visser (161) avec un filetage extérieur d'entraînement (171) et un filetage extérieur de serrage (181) opposés se trouvant entre le support principal de superstructure (20, 21a-21d) respectif et le support d'embout (221-223 ; 240-243) placé sur celui-ci, et
- le filetage extérieur d'entraînement (171) du boulon de rehaussement (161) s'engageant dans le filetage intérieur d'entraînement (172) du support de rehaussement (241 - 243).

2. Interface de montage de système selon la revendication 1, **caractérisée en ce que** le support principal de superstructure (20, 21a-21d) présente un montant d'implant (23) qui est réalisé de manière coudée par rapport à un cône d'implant (43).

3. Interface de montage de système selon la revendication 2, **caractérisée en ce que** le montant d'implant (23) du support principal de superstructure (20, 21a-21d) présente une forme conique ou conique (24, 25).

4. Interface de montage du système selon la revendication 1, **caractérisée en ce que** le support d'embout (221-223 ; 240-243) est soit un prolongement creux rectiligne du pilier d'implant (23), soit forme un élément tubulaire coudé.

5. Interface de montage de système selon la revendication 1, **caractérisée en ce que** le corps d'implant (10) et le support principal de superstructure (20, 21a-21d) présentent une géométrie d'accouplement (44) complémentaire au moins par zones pour assurer la sécurité contre la rotation d'un premier joint de montage (41).

6. Interface de montage de système selon la revendication 1, **caractérisée en ce que** le support principal de superstructure (20, 21a-21d) et le support d'embout (221-223 ; 240-243) présentent une géométrie d'accouplement (238) complémentaire au moins dans certaines zones pour assurer la sécurité contre la rotation dans un deuxième joint de montage (239).

7. Interface de montage de système selon la revendication 1, **caractérisée en ce que** l'évidement (51) traverse le support principal de superstructure (20, 21a-21d) et l'évidement (151) traverse le support d'embout (221-223 ; 240-243) respectivement entre l'extrémité avant et l'extrémité arrière.

8. Interface de montage de système selon la revendication 1, **caractérisée en ce que** les deux filets d'entraînement (71, 72; 171, 172) forment une paire d'entraînement (73, 173) et les deux filets de serrage (81, 82, 181, 182) forment une paire de serrage (83, 183).

9. Interface de montage de système selon les revendications 1 et 8, **caractérisée en ce que** les filetages (71, 72) de l'appariement d'entraînement (73) - avec le même signe de pas des filetages (71, 72, 81, 82) - ont un pas plus petit que les filetages (81, 82) de l'appariement de serrage (83).

10. Interface de montage de système selon les revendications 1 et 8, **caractérisée en ce que** les filetages (71, 72, 81, 82) des deux paires (73, 83) ont des signes de pas différents.

11. Interface de montage de système selon les revendications 1, 8 et 10, **caractérisée en ce que** les filetages (71, 72 ; 171, 172) de l'appariement d'entraînement (73, 173) ont chacun un signe de pas négatif, c'est-à-dire qu'il s'agit de filetages (71, 72 ; 171, 172) montant vers la gauche.

12. Interface de montage de système selon la revendication 1, **caractérisée en ce que** le diamètre du filetage extérieur de serrage (181) du boulon à visser (161) est supérieur au diamètre de son filetage extérieur d'entraînement (171).

13. Interface de montage du système selon la revendication 1, **caractérisée en ce que** le boulon fileté (60, 61 ; 160, 161) présente un collet de butée (54, 78 ; 154, 178) entre ou - dans le sens de vissage de serrage - derrière les filets extérieurs (71, 81 ; 171, 181).
